# EUROPÄISCHE PATENTSCHRIFT

(11) **EP 2 022 353 B1**
(45) Veröffentlichungstag und Bekanntmachung des Hinweises auf die Patenterteilung: **05.08.2009**
(21) Anmeldenummer: 08160220.3
(22) Anmeldetag: 11.07.2008
(51) Int. Cl.: A24F 19/06

(54) **Ascher**
Ashtray
Pelain

(30) Priorität: 21.07.2007 DE 202007010191 U
(43) Veröffentlichungstag der Anmeldung: 11.02.2009
(73) Patentinhaber: Dr. Schneider Kunststoffwerke GmbH, 96317 Kronach (DE); Audi AG, 85045 Ingolstadt (DE)
(72) Erfinder: Trinkwalter, Bernd, 96328, Tüschnitz (DE); Döge, Carsten, 85129, Oberdolling (DE); Morich, Lutz, 85139, Wettstetten (DE)
(74) Vertreter: Pröll, Jürgen

(56) Entgegenhaltungen:
- DE-B- 1 256 462
- FR-A- 1 004 076
- GB-A- 989 695

## Beschreibung

Die Erfindung betrifft einen Ascher, aufweisend einen Behälter mit einem obenseitigen zylinderförmigen Ansatz mit kreisrunder Öffnung und um 180° versetzt angeordnete Lagerstellen für an einem eingesetzten, die Öffnung verschließenden Deckel angebrachte Lagerzapfen.

Aus der DE 17 06 778 U1 ist ein Aschenbecher mit verdecktem Aschenbehälter bekannt, der insbesondere aus Keramik oder Kunststoff hergestellt ist. Durch die Abdeckung des Aschenbehälters soll erreicht werden, dass die kalte Asche von Zeit zu Zeit aus dem Behälter entfernt werden kann und glühende Asche oder auch die Asche schlechthin zur Meidung von Gerüchen abgedeckt ist. Der Aschenbecher weist einen wannenförmigen Behälter mit eckiger oder runder Grundform zur Aufnahme der Asche auf. Auf dem Behälter liegt in der Öffnung ein kippbar angeordneter Deckel, in dem Rillen zur Ablage der Zigarren oder Zigaretten angeordnet sind. Der Deckel liegt mit Hilfe von Zapfen auf entsprechenden Augen des Behälters auf. Des Weiteren sind Mittel, z. B. Anschläge, vorgesehen, die den Deckel in seiner Ruhelage halten, um unbeabsichtigtes Kippen zu verhindern. Der Deckel kann zum Säubern des Aschenbechers ohne Weiteres von dem Behälter abgenommen werden.

Aus der DE 12 56 462 A ist ein Ascher bekannt, welcher einen Behälter mit einer kreisrunden Öffnung nebst einen die Öffnung verschließenden Deckel aufweist. Der Deckel ist drehbar gelagert und weist Lagerstellen an einem zylinderförmigen Ansatz auf.

Aus FR-A-1 004 076 ist ein weiterer Ascher bekannt, der einen Behälter mit einer kreisrunden Öffnung und einen die Öffnung verschließenden Deckel aufweist. Es sind außerdem Lagerstellen für am Deckel angebrachte Lagerzapfen vorgesehen. Auf den Lagerzapfen sind Ritzel fest aufgebracht und die Lagerstellen sind an einem zylinderförmigen Ansatz vorgesehen.

Aus der GB-A-989 695 ist ein Ascher offenbart, der einen Behälter mit einem Deckel aufweist, wobei auf dem Deckel ein Ritzel fest aufgebracht ist. Es ist außerdem ein Zahnkranz vorgesehen, in den das Ritzel eingreift, wobei durch eine relative Verdrehung des Drehgriffs gegenüber dem Behälter der Deckel verschwenkt wird.

Es sind Tischaschenbecher bekannt, die einen Behälter aufweisen, auf den ein Drehverschluss aufschraubbar ist. Der Drehverschluss ist hohl ausgebildet und weist klappenförmig aneinanderstoßende Deckelhälften auf, die über aus dem Drehverschluss vorstehende und Gelenke im Drehverschluss überstehende Verlängerungen manuell auf- und zuschwenkbar sind, so dass aufliegende Asche oder Abfälle mit kleineren Abmessungen durch Öffnen der beiden Deckelhälften in den eigentlichen Behälter hineinfallen können. Diese Behälter bestehen in der Regel aus Blech, ebenso der Drehverschluss mit den beiden Deckelhälften, so dass auch Glut, Zigaretten- oder Zigarrenstummel in den Aschenbehälter eingegeben werden können, ohne dass Brandgefahr besteht.

Der Erfindung liegt die Aufgabe zugrunde, einen Ascher derart weiterzuentwickeln, dass der Deckel einfach zu bedienen ist, der Ascher selbst auch auf einfache Weise gesäubert werden kann und insbesondere auch in ein Kraftfahrzeug, z. B. in eine Aufnahme eines Armaturenbrettes oder in eine Ausnehmung für eine Getränkedose oder ein Getränkeglas einsetzbar und auch einfach wieder entfernbar ist, wobei sichergestellt sein soll, dass Glut gesichert gelagert wird und hiervon keine Brandgefahr ausgehen kann.

Die Aufgabe löst die Erfindung durch Ausgestaltung des Aschers nach der im Anspruch 1 angegebenen technischen Lehre.

Grundsätzlich kann der Deckel flach bzw. eben als Scheibe ausgebildet sein. In vorteilhafter Weise ist er jedoch kalottenförmig ausgebildet, so dass in der einen Schließposition praktisch keine Asche in die ringförmige Aufnahme, die durch den Deckel und den Drehgriff gebildet ist, eingegeben werden kann. In dieser Position kann beispielsweise eine Zigarre in eine obenseitig vorgesehene Lagerschale eingelegt werden. Die entsprechende Ausnehmung weist dazu eine schalenförmige Abdeckung auf. Es ist aber auch möglich, an dieser Stelle einen Einsatz mit einem Werbeaufdruck vorzusehen oder einen solchen in die Lagerschale einzubringen.

Die kalottenförmige Ausbildung hat darüber hinaus den Vorteil, dass beim Verbringen des Deckels in die zweite Schließstellung, in der die Oberseite in den Behälter hineinreicht, ein Hohlraum gegeben ist, der durch die Kalottenwand selbst bestimmt ist und in den die Asche eingegeben werden kann. Durch Drehung des Drehgriffes ist dann ein Verschwenken möglich, so dass die zwischengelagerte Asche in den eigentlichen Aschenbehälter hineinfällt. Dies kann z. B. dann vorgenommen werden, wenn keine Glut mehr sichtbar ist. Zum Löschen, z. B. einer Zigarette, kann auch ein Ansatz in dem kalottenförmigen Hohlraum vorstehend vorgesehen sein, der auf der Oberseite Ausprägungen aufweist, um das Ausdrücken der Glut zu erleichtern. In allen Ausführungsformen wird das Verschwenken des Deckels dadurch erreicht, dass der Deckel eine Drehachse aufweist, die verständlicherweise nicht durchgehend sondern durch ausgeformte Lagerzapfen geprägt ist. Für die Auslösung der Schwenkbewegung ist nur ein Ritzel an einer Seite, also an einem Lagerzapfen, erforderlich. Um eine symmetrische Kraftübertragung zu ermöglichen, ist es jedoch zweckmäßig, auf beiden Seiten auf den Zapfen entsprechende Ritzel vorzusehen. Diese Ritzel greifen, um bei der relativen Verdrehung des Drehgriffes gegenüber dem Behälter die Schwenkbewegung des Deckels zu bewirken, in eine Zahnreihe bzw. einen Zahnkranzabschnitt ein. Je nachdem, ob die Lagerzapfen in Lagerstellen an dem zylinderförmigen Ansatz oder in Lagerstellen an der Mantelwand des Drehgriffes gelagert sind, sind die Zahnreihen bzw. die Zahnradsegmente oder auch ein durchgehender Zahnkranz an der Innen- oder Außenseite des zylinderförmigen Ansatzes oder an der Innenseite der Mantelwand oder an der Innenseite eines Einzuges des Drehgriffes vorzusehen. Befinden sich die Lagerstellen an dem Drehgriff, so ist ersichtlich, dass beim Aufheben der Rastverbindung des Drehgriffes an dem zylinderförmigen Ansatz durch Untergreifen einer Gleitkante mittels Widerlager die Teile frei zugänglich sind. Insbesondere kann dann der Behälter herausgenommen, entleert und ausgewaschen werden.

Vorteilhafte Weiterbildungen der Erfindung sind in den Unteransprüchen im Detail angegeben.

Der Drehgriff kann grundsätzlich aus Metall oder aber auch aus Kunststoff bestehen. Er kann ebenso auch aus anderen Materialien gefertigt sein. Diese sollten jedoch der Aufgabe gemäß feuerhemmend ausgebildet sein, damit die Glut einer Zigarette oder einer Zigarre keine Entzündung bewirken kann.

Um bei Einbau eines solchen Aschers in ein Interieur eines Innenraumes eines Pkws diesen optisch anpassen zu können, sind insbesondere die zugänglichen Teile eloxiert oder oberflächenbehandelt. Zum Beispiel kann der Drehgriff eloxiert in einer Farbe, z.B. silbern, ausgeführt sein, während die Oberseite der Kalotte oder die des Deckels in einer anderen Farbe, z.B. schwarz, eloxiert ist. Ebenso können durch entsprechende Farbanstriche oder Oberflächenbeschichtungen die gewünschten optischen Effekte erzielt werden.

Grundsätzlich kann der Zahnkranz durchgehend ausgebildet sein, sich also über 360° erstrecken. Zweckdienlich ist es jedoch, den Zahnkranz nur bogenabschnittsweise vorzusehen, wobei durch entsprechende Zahnteilung des Ritzels und des Zahnkranzes z. B. schon bei einer Drehung von nur weniger als 34° ein Verschwenken des Deckels um 180° bewirkt werden kann. Dies hängt letztendlich vom Übersetzungsverhältnis zwischen Zahnreihe bzw. Zahnkranz und Ritzel ab. Mit dem Verschwenken z. B. des kalottenförmigen Deckels wird zugleich erreicht, dass die zuvor aufgenommene Glut oder Asche in den Behälter geschüttet wird, ohne dass die beschmutzte Oberfläche an der Innenseite der Kalotten sichtbar ist. Das Erscheinungsbild in der ersten Schließstellung ist immer durch eine saubere Oberfläche der Kalottenoberseite geprägt. Dasselbe ist auch gegeben, wenn der Deckel eben ausgebildet ist.

Durch entsprechende Ausbildung der Zahnreihe kann erreicht werden, dass in der einen Richtung eine 180°-Schwenkung möglich ist, während bei Drehung in die andere Richtung eine darüber hinausgehende, z. B. 360°-Drehung ermöglicht wird. Der Drehgriff selbst ist als aufrastbarer Ring ausgebildet, der obenseitig einen Einzug aufweist. An der Innenseite der Mantelwand können die Lagerstellen für die Aufnahme der Lagerzapfen an dem Deckel vorgesehen sein. An dem Deckel sind die Lagerzapfen einschließlich der Ritzel angespritzt, wenn dieser aus Kunststoff besteht, so dass ein vorgefertigtes Teil für die Montage verwendet werden kann. Befindet sich die Drehachse jedoch in Lagerstellen an dem zylinderförmigen Ansatz und liegt das Ritzel an der Innenfläche des Drehringes an, so muss der Deckel nach dem Entfernen des aufgerasteten Drehgriffes ebenfalls herausgenommen werden, um den Behälter entleeren und auswaschen zu können. Eine Reinigung ist nach dem Entleeren des Behälters in montiertem Zustand des Deckels möglich.

Um eine Verdrehsicherung des Behälters im eingebauten Zustand, z. B. in einer Ausnehmung einer Mittelkonsole in einem Kraftfahrzeug, zu gewährleisten, können an der Unterseite beispielsweise Arretierungskreuze oder eine rillenförmige Ausnehmung vorgesehen sein. Diese greift dann auf entsprechende vorstehende Rippen oder Noppen an der Bodenfläche in der Ausnehmung, in die der Behälter eingesetzt werden soll. Solche Arretierungskreuze können auch auf Verstrebungen innerhalb einer Aufnahme für eine Getränkedose oder einen anderen Getränkebehälter eingebracht sein, so dass alternativ zu einer Getränkedose oder einem Getränkebehälter auch ein solcher Ascher einsetzbar ist. Der Ascher nach der Erfindung kann aber auch grundsätzlich als Tischascher verwendet werden. In diesem Fall ist es empfehlenswert, einen Übertopf zu verwenden, der an der Unterseite entsprechende Prägungen aufweist, so dass der Behälter in diesen Übertopf eingesetzt werden kann.

Des Weiteren ist die Grundform des Behälters im Querschnitt nicht an die runde Ausführungsform des Ansatzes gebunden. So kann auch ein im Wesentlichen eckiger Behälter mit einem runden zylinderförmigen Ansatz versehen werden, um die gewünschten Funktionen sicherzustellen. Die Verdrehsicherung des Behälters kann auch dadurch erreicht werden, dass an der Mantelfläche des Behälters außenseitig vorstehend Noppen oder eine Nut eingebracht sind, die in korrespondierende Mittel an der Innenfläche einer Aufnahme greifen, in die der Behälter eingesetzt wird. Bei Verwendung von Kunststoff, insbesondere durchsichtigem oder transluzentem Kunststoff, kann auch eine Beleuchtung vorgesehen sein, die den Drehgriff ausleuchtet.

Zur Begrenzung der Schwenkbewegung des Deckels kann die Länge der Zahnreihe so groß gewählt werden, dass in gewünschter Weise eine 180°-Schwenkung über die eingreifenden Ritzel möglich ist. Damit danach ein Weiterdrehen verhindert wird und nur durch Zurückdrehen wieder ein Zurückschwenken möglich ist, kann die Zahnreihe an einer Flanke einer vorstehenden Rippe enden, so dass das Ritzel daran anschlägt. Es ist aber auch möglich, die Zahnreihe so weiterzubilden, dass ein Durchdrehen, also ein Verdrehen des Deckels um 180° möglich ist, so dass der Deckel zum einen obenseitig am Behälter in Erscheinung tritt und im anderen Betätigungsfall ins Innere des Behälters schwenkt und die obere Öffnungsseite offen ist. Es kann aber auch an dem zweiten Zapfen auf der Schwenkachse ein Anschlagsglied, z. B. in Form einer Halbkreisscheibe, vorgesehen sein, das mit der geraden Kantenfläche gegen einen Anschlag dreht, wodurch der Drehwinkel des Ritzels und damit der Verschwenkweg begrenzt ist. Ein solcher Anschlag kann an dem Behälter oder an der Innenseite des Drehgriffes vorgesehen sein. Anstelle einer halbrunden Scheibe kann auch ein Zapfen radial abstehend vorgesehen sein, der die gleiche Funktion wahrnimmt.

Die Erfindung wird nachfolgend anhand des in der Zeichnung dargestellten Ausführungsbeispiels ergänzend erläutert.

In den Zeichnung zeigen:
- Fig. 1: eine Seitenansicht, eine Draufsicht und einen Schnitt längs der Schnittlinie A-A in der obe- ren Abbildung eines Aschers nach der Erfindung mit geschlossenem haubenförmigen Deckel,
- Fig. 2: den Ascher nach Figur 1 mit einem um 96° ge- schwenkten haubenförmigen Deckel,und
- Fig. 3: den zuvor dargestellten Ascher mit um 180° ge- schwenktem Deckel,
- Fig. 4: die Draufsicht auf einen Behälter nach der Er- findung mit abgenommenem Drehgriff und einge- zeichneten Schnittlinien C-C und E-E,
- Fig. 5: eine Schnittdarstellung längs der Schnittlinie C-C in Fig. 4,
- Fig. 6: eine Teilschnittdarstellung gemäß Schnittlinie E-E in Fig. 4 in vergrößerter Darstellung, aus der die ringförmige Nutlagerung des Drehgriffes ersichtlich ist,
- Fig. 7: eine Darstellung des Behälters nach Fig. 5 in der Seitenansicht in einer bestimmten Drehposi- tion, aus der ersichtlich ist, dass der Deckel 3 nach oben gerichtet den Behälter 1 ab- schließt, mit Ritzel und Zahnreihe,
- Fig. 8: den Behälter nach Fig. 7 in einer 90°-Drehung und
- Fig. 9: den in Fig. 7 dargestellten Behälter in der Draufsicht.

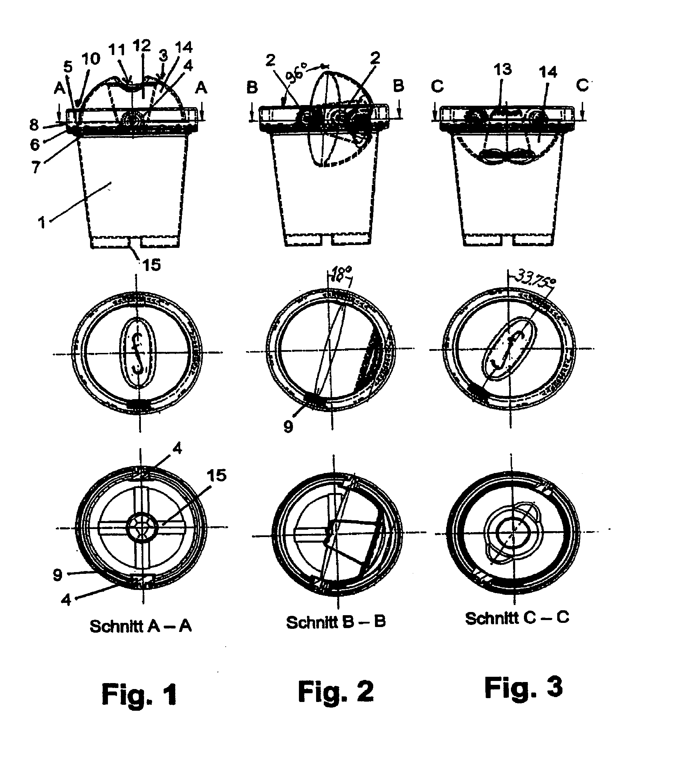

Der Ascher gemäß den Figuren 1, 2 und 3 besteht aus einem Behälter 1. In diesen Behälter 1 ist an der Unterseite ein Arretierungskreuz 15 eingeprägt, mit dem der Behälter beispielsweise auf Rippen am Boden eines Ausschnittes in einem Armaturenbrett oder einer Mittentunnelabdeckung im Kraftfahrzeug verdrehsicher einsetzbar ist. Der Behälter 1 weist obenseitig einen zylinderförmigen Ansatz auf, der außenseitig eine Gleitkante 6 aufweist. Diese ringförmige Gleitkante 6, die bei Ausbildung des Behälters mit Ansatz aus Kunststoff angespritzt sein und eine wulstförmige oder eine eckige Querschnittsform aufweisen kann, dient dazu, dass ein aufgedrückter Drehgriff 5 mit daran vorgesehenen, federnden Freischnitten, die Widerlager 7 bilden, aufrasten kann. Diese Freischnitte weisen an der Innenseite vorstehende Rastnasen mit Aufgleitflächen und Abzugsflächen auf. Die Federwirkung der Mantelwand bewirkt, dass beim Aufdrücken die innenseitigen Rastnasen rastend über die Gleitkante 6 gleiten, wodurch der Drehgriff 5 gesichert gehalten ist und gedreht werden kann. Der Drehgriff kann ferner, um Kippen zu vermeiden, an mehreren anderen Stellen obenseitig Stützen oder einen Stützring aufweisen, der auf die obere Stirnseite des zylinderförmigen Ansatzes aufgreift.

Der Drehgriff 5 weist an der Oberseite einen ringförmigen Einzug und damit eine ringförmige Ebene 10 auf. Diese umschließt eine runde Öffnung. In dem Loch ist ein kalottenförmiger Deckel 3 eingesetzt. Der Durchmesser und die Lagerung der Lagerstellen 2 sowie der darin eingreifende Lagerzapfen einer Schwenkachse des Deckels 3 sind so gewählt, dass der Deckel 3 um 180° aus der in Figur 1 dargestellten Position in die in Figur 3 dargestellte Position verschwenkbar ist. Um das Verschwenken zu bewirken, befinden sich auf den Lagerzapfen Ritzel 4. Die Lagerstellen selbst sind an der Innenseite der Mantelfläche 8 des Drehgriffes 5 um 180° versetzt vorgesehen. Es handelt sich dabei um runde Ausnehmungen, die unter Ausnutzung der Elastizität der Mantelwand 8 über die Lagerzapfen gerastet werden können. Das Ritzel 4, das im Ausführungsbeispiels beidseitig an den Lagerzapfen vorgesehen ist, greift in eine Zahnreihe 9 bzw. einen Zahnkranzabschnitt ein, die bzw. der über einen Bereich wie im Ausführungsbeispiel von ca. 35° bis ca. 40° vorgesehen ist. Durch die Abstimmung des Übersetzungsverhältnisses, d. h. die Teilung, wird dabei erreicht, dass im Ausführungsbeispiel der haubenförmige Deckel um 180° aus der ersten Verschließstellung gemäß Figur 1 in die zweite Verschließstellung gemäß Figur 3 verschwenkbar ist. Dazwischen kann jede beliebige Zwischenposition eingenommen werden, wie aus Figur 2 ersichtlich ist. Ferner ist ersichtlich, dass dann, wenn sich der Deckel 3 aus der Position in Figur 3 zurück bewegt, die kalottenförmige Haube nach oben verschwenkt und die eingelegte Asche in den Behälter 1 fällt. Zum Ausdrücken von glühenden Zigaretten ist an der hohlen Innenseite des Deckels 3 ein Ansatz 12 mit einer Ausprägung 13 vorgesehen, auf der die Zigarette oder die Zigarre ausgedrückt werden kann. Um diesen Ansatz 12 herum ist ein Hohlraum 14 vorgesehen, in den die Asche beim Ausdrücken fällt oder beim Rauchen abgestreift oder abgeklopft werden kann. Durch das Verschwenken aus der in Figur 3 dargestellten Position in die in Figur 1 dargestellte Position durch Rückdrehen des Drehgriffes 5 in die entgegengesetzte Richtung ist sichergestellt, dass die Asche bzw. die eingegebenen Abfälle in den Behälter fallen. Zugleich erscheint obenseitig wieder die haubenförmige saubere Kappe des kalottenförmigen Deckels 3. Auf der Oberseite befindet sich darüber hinaus eine schalenförmige Aufnahme 11, in die beispielsweise eine Zigarette oder Zigarre eingelegt werden kann. Aus der Draufsicht ergeben sich verschiedene Drehstellungen des Drehringes und damit Positionen des bewegungsmitgekoppelten haubenförmigen Deckels 3. Der aufgebrachte Werbeaufdruck verdeutlicht dies.

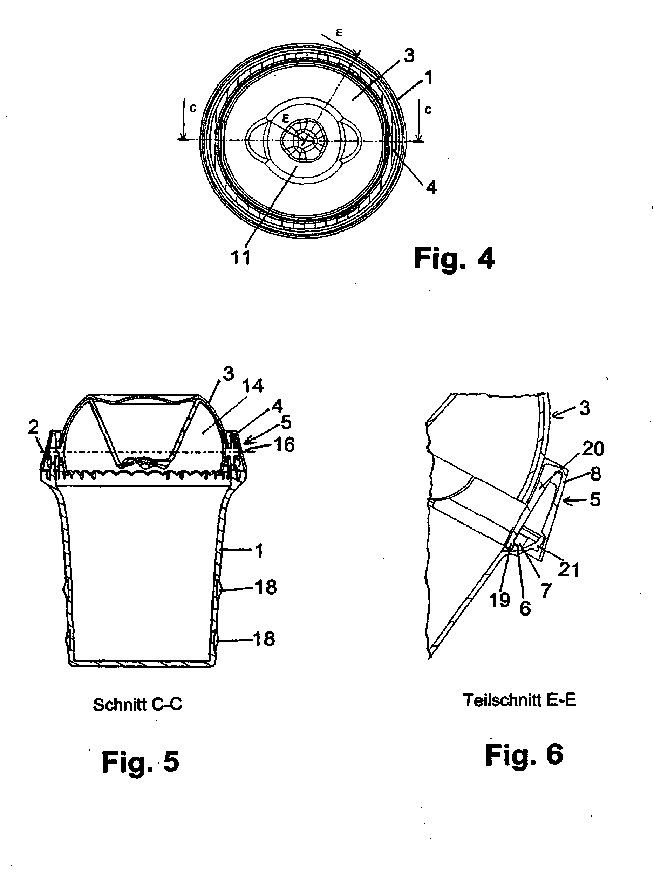

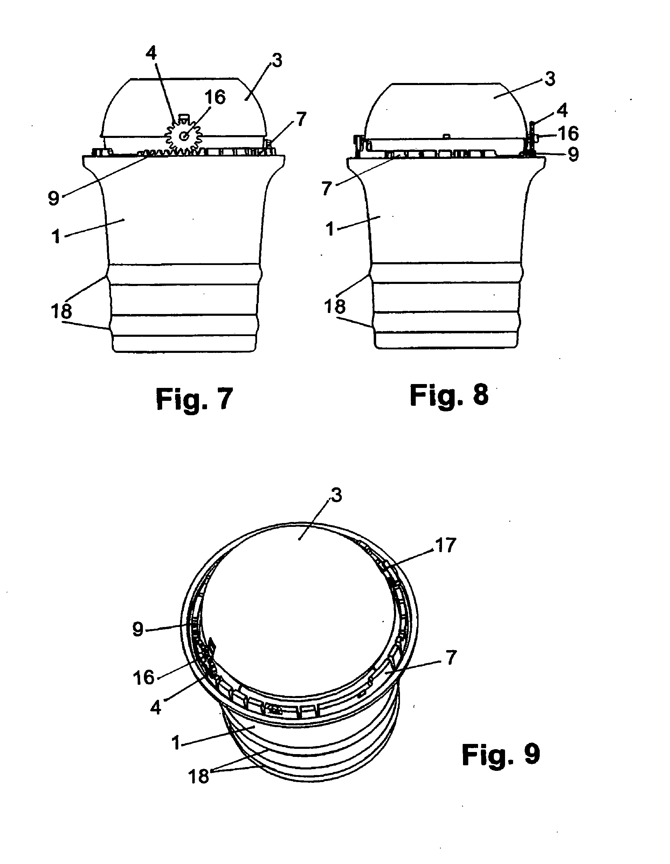

In Figur 4 ist in einer vereinfachten Draufsicht ein im Querschnitt gezeichneter Ascher nach der Erfindung dargestellt, der aus einem Behälter 1 besteht, an dem obenseitig ein Deckel 3 vorgesehen ist. An der rechten Seite ist ein Ritzel 4 eines Schwenkmechanismusses für den Deckel 3 eingezeichnet, welches Ritzel 4 in eine nicht deutlich sichtbare Zahnreihe eingreift und mit dem Lagerzapfen in einem Lager in dem nicht dargestellten Drehgriff (ist abgenommenen) gelagert ist. Aus dieser Draufsicht ist ferner die schalenförmige Aufnahme 11 obenseitig zu ersehen, die in den Deckel 3 eingebracht ist. Eine Darstellung längs der Schnittlinie C-C ist in Figur 5 widergegeben und ein Teilauszug gemäß Schnittlinie E-E in Figur 6 dargestellt. Die weiteren Figuren 7, 8 und 9 zeigen den gleichen Ascher, jedoch mit abgenommenem Drehgriff.

Aus der Schnittzeichnung in Figur 5 ist ersichtlich, dass an dem Behälter 1, nämlich an der Mantelwand, wulstförmige Ringe 18 angeformt sind, die z.B. mit Federn in einer Aufnahme in einem Kraftfahrzeug zusammenwirken und ein unbeabsichtigtes Herausziehen des Behälters 1 aus der Aufnahme verhindern. Des Weiteren ist aus Figur 5 die Lagerung des Ritzels 4 in dem Drehgriff ersichtlich und auf der gegenüberliegenden Seite die Lagerung des Zapfens in der Lagerstelle 2 innerhalb des Drehgriffes 5. Durch Drehen des Drehgriffes 5 wird durch die Mitkopplung über das Ritzel 4 und die Zahnreihe 9 der Deckel 3 verschwenkt, wie aus den Figuren 1, 2 und 3 ersichtlich ist. Der Drehgriff 5 weist - wie aus der vergrößerten Teilschnittdarstellung längs Schnittlinie E-E in Figur 6 ersichtlich - zwei V-förmig miteinander verbundene Seitenwände, nämlich die Mantelwand 8 und die Innenwand 20 auf und ist aus Kunststoff hergestellt. Die Seitenwände sind über das obenseitig vorgesehene Brückenteil in sich federelastisch miteinander verbunden. Die Innenwand 20 greift mit dem Ansatz 19 federnd unter die Gleitkante 6, die an den Unterseiten der lamellenförmig ausgebildeten Widerlager und verteilt am Umfang der ringförmigen Anformung vorgesehen sind. Die Widerlager 7 sind je nach benötigter Funktion länger oder kürzer ausgebildet. Die Mantelwand 8 erstreckt sich über die Kante des angespritzten Führungsringes bzw. der ringförmigen Anformung. Es ist ersichtlich, dass der Handgriff 5 gedreht werden kann, sich leicht aufschnappen lässt und die Verbindungsteile vollständig verdeckt.

Aus Figur 5 ist ferner ersichtlich, dass der Lagerzapfen 16 in einer Lagerstelle 2 des Handgriffes 5 gelagert ist, so dass das Oberteil des Aschers samt aufgesetztem Drehgriff 5 abnehmbar ist. Auch ist aus Figur 5 die Lagerstelle 2 deutlich sichtbar, in der der Lagerzapfen 16 des Ritzels 4 gelagert ist. In dem Deckel 3 befindet sich der Hohlraum 14 für die Aufnahme der Asche, wenn der Deckel 3 aus der dargestellten Position um 90° gedreht wird.

Die Figuren 7, 8 und 9 zeigen die wesentlichen Elemente ebenfalls. Insbesondere sind die aus dem oberen Rand des Behältnisses vorstehenden Widerlager 7 zu sehen und die Zahnreihe 9 sowie das Ritzel 4, das in die Zahnreihe 9 eingreift, und der Zapfen 16, an dem das Ritzel 4 befestigt ist.

In Figur 8 ist der Ascher um 90° versetzt zu Figur 7 und in Figur 9 eine perspektivische Draufsicht des Aschers dargestellt. Obenseitig befindet sich der Deckel 3. In Lagerstellen 2 des Behältnisses 1 oder an der Innenseite der Mantelwand 8 des Drehgriffes 5 sind die Lagerzapfen 16, die beidseitig vorgesehen sind, drehbar gelagert. An der einen Seite trägt der Lagerzapfen 16 das Ritzel 4 für die Wirkverbindungsherstellung, auf der anderen Seite ist ein halbkreisförmiges und scheibenförmiges Anschlagselement 17 vorgesehen, das gegen einen Endanschlag an der Innenseite des Drehgriffes 5 oder an eine Anschlagsfläche an dem Widerlager dreht und den Schwenkweg des Deckels 3 begrenzt. Im übrigen zeigen die Darstellungen auch die wulstförmigen Ringe 18, die zur Fixierung des Behältnisses 1 in einer Aufnahme z.B. in einem Kraftfahrzeug oder in einem Lastkraftfahrzeug dienen.

### Bezugszeichenliste

- 1: Behälter
- 2: Lagerstellen
- 3: Deckel
- 4: Ritzel
- 5: Drehgriff
- 6: Gleitkante
- 7: Widerlager
- 8: Mantelwand
- 9: Zahnreihe
- 10: ringförmige Ebene
- 11: schalenförmige Aufnahmen
- 12: Ansatz
- 13: Ausprägungen
- 14: Hohlraum
- 15: Arretierungskreuz
- 16: Lagerzapfen
- 17: Anschlagselement
- 18: wulstförmiger Ring
- 19: Rastring
- 20: Innenwand
- 21: Führungsring

## Patentansprüche

1. Ascher, aufweisend einen Behälter (1) mit einem obenseitigen zylinderförmigen Ansatz mit kreisrunder Öffnung und um 180° versetzt angeordnete Lagerstellen (2) für an einem eingesetzten, die Öffnung verschließenden Deckel (3) angebrachte Lagerzapfen (16), welcher Deckel (3) um die so gebildete Horizontalachse drehbar ist, **dadurch gekennzeichnet,**
- **dass** auf mindestens einem Lagerzapfen (16) ein Ritzel (4) fest aufgebracht ist,
- **dass** mit dem zylinderförmigen Ansatz ein Drehgriff (5) zusammenwirkt, der auf den zylinderförmigen Ansatz des Behälters (1) aufsetzbar und mittels angebrachter Widerlager (7) um die Längsachse des Behälters (1) drehbar gelagert und am Behälter (1) gesichert gehalten ist,
- **dass** die Lagerstellen (2) entweder an dem zylinderförmigen Ansatz oder an der Mantelwand des Drehgriffes (5) vorgesehen sind,
- **dass** an der Innenseite des Drehgriffes (5) oder am zylinderförmigen Ansatz im Bereich des Ritzels (4), mindestens über einen bestimmten Bogenbereich verlaufend, eine Zahnreihe (9) oder mindestens ein Abschnitt eines Zahnkranzes vorgesehen ist, in die oder den das Ritzel (4) eingreift, und
- **dass** durch relative Verdrehung des Drehgriffes (5) gegenüber dem Behälter (1) der Deckel (3) verschwenkt.

2. Ascher nach Anspruch 1, **dadurch gekennzeichnet, dass** der Deckel (3) kalottenförmig ausgeführt ist und aus der oberen ringförmigen Ebene (10) des Drehgriffes (5) obenseitig kuppelförmig in einer Verschließstellung hervorsteht, wobei der Durchmesser des Deckels (3) so gewählt ist, dass durch Verdrehen des Drehgriffes (5) die Kalotte sich dreht und die Innenseite bei 180°-Drehung nach oben kehrt und der Deckel (3) in die zweite Verschließstellung verbringbar ist.

3. Ascher nach Anspruch 2, **dadurch gekennzeichnet, dass** an der Innenfläche des kalottenförmigen Deckels (3) vorstehend ein Ansatz (12) angebracht ist, auf dem nutenförmige Einprägungen zur Auflage einer Zigarette oder eine Zigarre oder solche Ausprägungen (13) vorgesehen sind, um an diesen Flächen die Glut einer Zigarette oder Zigarre durch Aufdrücken derselben ersticken zu können.

4. Ascher nach Anspruch 3, **dadurch gekennzeichnet, dass** um den Ansatz (12) ein Hohlraum (14) zur Aufnahme von Asche gegeben ist.

5. Ascher nach Anspruch 1, **dadurch gekennzeichnet, dass** bei geschlossenem Deckel (3) obenseitig mindestens eine schalenförmige Aufnahme (11) für eine Zigarette oder Zigarre vorgesehen ist.

6. Ascher nach Anspruch 1, **dadurch gekennzeichnet, dass** der Drehgriff (5) die an den Widerlagern (7) vorgesehenen Gleitkanten (6) mit dem zylinderförmigen Ansatz rastend übergreift oder in Ausnehmungen eingreift.

7. Ascher nach Anspruch 1 oder 6, **dadurch gekennzeichnet, dass** der Drehgriff (5) aus Kunststoff besteht und ringförmig ausgebildet ist und an der Mantelwand innenseitig elastische Widerlager (7) bildende Wandvorsprünge oder elastische Federfreischnitte aufweist, an deren unteren Kanten nach innen vorstehende Rastnasen vorgesehen sind, die einen äußeren Führungsring an dem zylinderförmigen Ansatz im aufgerasteten Zustand untergreifen.

8. Ascher nach Anspruch 1, 6 oder 7, **dadurch gekennzeichnet, dass** der Drehgriff (5) obenseitig eine ringförmige Einzugsebene (10) aufweist und dass an der Innenseite dieses ringförmigen Einzuges die Zahnreihe (9) vorgesehen ist.

9. Ascher nach Anspruch 1, 6 oder 7, **dadurch gekennzeichnet, dass** die Zahnreihe (9) an der Innen-oder an der Außenseite des zylinderförmigen Ansatzes derart beabstandet vom oberen Rand angeordnet ist, dass das in den Lagerstellen in der Mantelwand des Drehgriffes (5) gelagerte Ritzel (4) mit der Welle aufliegend oder darüber bei gleichzeitiger Drehung durch den Eingriff in die Verzahnung verschiebbar ist.

10. Ascher nach Anspruch 1, 6, 7, 8 oder 9, **dadurch gekennzeichnet, dass** der Drehgriff (5), der ringförmige Einzug und/oder der Deckel (3) eloxiert sind oder aus Metall bestehen.

11. Ascher nach Anspruch 5, **dadurch gekennzeichnet, dass** die schalenförmige Ausnehmung (11) von einem konturenangepassten Einlegestück oder von einem Werbeträgereinsatz verdeckt ist.

12. Ascher nach Anspruch 1, **dadurch gekennzeichnet, dass** der Behälter (1) rund oder eckig im Querschnitt ausgebildet ist und obenseitig einen kragenförmigen umlaufenden Ansatz und /oder Führungsring (21), in Verlängerung angeformt oder daran befestigt, aufweist.

13. Ascher nach Anspruch 1 oder 12, **dadurch gekennzeichnet, dass** der Behälter (1) an der Unterseite ein Arretierungskreuz (15) oder eine Arretierungsausnehmung oder einen Arretierungsansatz aufweist und mit dem Boden auf eine konturangepasste Lagerfläche in einem äußeren Behälter aufsetzbar oder in eine Ausnehmung in einer Verblendung in einem Kraftfahrzeug verdrehgesichert einsetzbar ist oder dass an der Außenwand Rippen oder Noppen vorstehen, die in Nuten in einer Wand einer Aufnahme in einem Kraftfahrzeug oder Behälter zur Verdrehsicherung einsetzbar sind.

14. Ascher nach Anspruch 1, **dadurch gekennzeichnet, dass** der Behälter (1) aus Metall, Keramik oder aus hitzebeständigem Kunststoff besteht.

15. Ascher nach Anspruch 1, **dadurch gekennzeichnet, dass** in dem Drehgriff (5) eine Beleuchtung integriert ist und mindestens die ringförmige Oberseite mindestens teilweise transparent ausgebildet ist und sich die Lichtquelle unterhalb der Oberseite befindet.

16. Ascher nach Anspruch 1, **dadurch gekennzeichnet, dass** die Zahnreihenlänge mit der Zähnezahl des Ritzels (4) so abgestimmt ist, dass beim Verdrehen des Drehgriffes in die eine Richtung der Deckel maximal um 180° verschwenkt und bei einer entgegengesetzte Drehung mindestens um 180° zurückschwenkt und Zwischenstellungen einnehmbar sind.

17. Ascher nach Anspruch 1 oder 16, **dadurch gekennzeichnet, dass** in der einen Drehrichtung des Drehgriffes ein Verschwenken des Deckels oder der Kappe nur bis in die eine Verschließposition erfolgt, während in der anderen Drehrichtung eine Überdrehung über 180° hinaus möglich ist.

18. Ascher nach Anspruch 1, 16 oder 17, **dadurch gekennzeichnet, dass** auf dem zweiten entgegengesetzt vom Ritzel (4) vorgesehenen Lagerzapfen ein Anschlagselement (17) vorgesehen ist, das synchron mit dem Deckel (3) drehbar angeordnet ist und gegen einen festen Anschlag am Behälter (1) oder an der Innenseite des Drehgriffes (5) bei gleichzeitiger Begrenzung des Schwenkwinkels des Deckels (3) dreht.

## Claims

1. Ash tray, comprising a container (1) with a cylindrical projection, which is at the top side, with a circular opening and bearing points (2), which are arranged to be offset by 180°, for bearing pins (16) mounted on an inserted cover (3) which closes the opening, which cover (3) is rotatable about the thus-formed horizontal axis, **characterised in that**
- a pinion (4) is fixedly mounted on at least one bearing pin (16),
- a rotary handle (5), which can be placed on the cylindrical projection of the container (1) and is mounted to be rotatable about the longitudinal axis of the container (1) by means of mounted counter-bearings (7) and which is secured to the container (1), cooperates with the cylindrical projection,
- the bearing points (2) are provided either at the cylindrical projection or at the circumferential wall of the rotary handle (5),
- a tooth row (9) or at least a section of a rim gear in which the pinion (4) engages is provided at the inner side of the rotary handle (5) or at the cylindrical projection in the region of the pinion (5) to extend at least over a defined curve section, and
- the cover (3) is pivoted by rotation of the rotary handle (5) relative to the handle (1).

2. Ashtray according to claim 1, **characterised in that** the cover (3) is of spherical construction and protrudes from the upper annular plane (10) of the rotary handle (5) at the top side in dome shape into a closing setting, wherein the diameter of the cover (3) is selected so that through rotation of the rotary handle (5) the sphere rotates and the inner side in the case of 180° rotation faces upwardly and the cover (3) can be brought into the second closing setting.

3. Ashtray according to claim 2, **characterised in that** a protrusion (12), on which groove-shaped impressions for support of a cigarette or cigar or such stampings (13) are provided so as to be able to smother at these surfaces the burning ash of a cigarette or cigar by pressing onto the same, is formed at the inner surface of the spherical cover (3).

4. Ashtray according to claim 3, **characterised in that** a cavity (14) for reception of ash is provided around the protrusion (12).

5. Ashtray according to claim 1, **characterised in that** when the cover (3) is closed at least one shell-shaped receptacle (11) for a cigarette or cigar is provided at the upper side.

6. Ashtray according to claim 1, **characterised in that** the rotary handle (5) engages in detenting manner over the slide edges (6), which are provided at the counter-bearings (7), by the cylindrical protrusion or engages in recesses.

7. Ashtray according to claim 1 or 6, **characterised in that** the rotary handle (5) consists of plastics material and is of annular construction and has, internally at the circumferential wall, wall projections, which form resilient counter-bearings (7), or resilient sections cut free, at the lower edges of which are provided inwardly projecting detent lugs which in detented state engage under an outer guide ring at the cylindrical projection.

8. Ashtray according to claim 1, 6 or 7, **characterised in that** the rotary handle (5) has an annular intake plane (10) at the top side and that the tooth row (9) is provided at the inner side of this annular intake.

9. Ashtray according to claim 1, 6 or 7, **characterised in that** the tooth row (9) at the inner or outer side of the cylindrical projection is arranged at such a spacing from the upper edge that the pinion (4) mounted in the bearing points in the circumferential wall of the rotary handle (5) with the shaft resting on or disposed thereabove is displaceable with simultaneous rotation due to the engagement in toothing.

10. Ashtray according to claim 1, 6, 7, 8 or 9, **characterised in that** the rotary handle (5), the annular intake and/or the cover (5) are anodised or consist of metal.

11. Ashtray according to claim 5, **characterised in that** the shell-shaped recess (11) is covered by an inlay member, which is matched in contour, or by an advertisement carrier insert.

12. Ashtray according to claim 1, **characterised in that** the container (1) is of round or polygonal construction in cross-section and has at the top side an encircling collar-shaped projection and/or guide ring (21), formed as a prolongation or fastened thereto.

13. Ashtray according to claim 1 or 12, **characterised in that** the container (1) has at the underside a locking cross (15) or a locking recess or a locking projection and is placeable by the base on a bearing surface, which is matched in contour, in an outer container or is insertable to be secure against rotation in a recess in a facing in a motor vehicle or that ribs or nubs protrude at the outer wall and are insertable into grooves in a wall of a mount in a motor vehicle or container for securing against rotation.

14. Ashtray according to claim 1, **characterised in that** the container (1) consists of metal, ceramic or heat-resistant plastics material.

15. Ashtray according to claim 1, **characterised in that** a lighting means is integrated in the rotary handle (5) and at least the annular upper side is formed to be transparent at least in part and the light source is disposed below the upper side.

16. Ashtray according to claim 1, **characterised in that** the tooth row length is so matched to the number of teeth of the pinion (4) that on rotation of the rotary handle in one direction the cover is pivoted through at most 180° and on a opposite rotation is pivoted back through at least 180° and can adopt intermediate positions.

17. Ashtray according to claim 1 or 16, **characterised in that** in one rotational direction of the rotary handle a pivotation of the cover or cap takes place only up to a closing position, whilst in the other rotational direction an over-rotation beyond 180° is possible.

18. Ashtray according to claim 1, 16 or 17, **characterised in that** an abutment element (17) is provided on the second bearing pin provided opposite the pinion (14), which element is arranged to be rotatable synchronously with the cover (3) and rotates against a fixed abutment at the container (1) or at the inner side of the rotary handle (5) with simultaneous limitation of the pivot angle of the cover (3).

## Revendications

1. Cendrier, comprenant un récipient (1) avec une coiffe de forme cylindrique sur le côté supérieur présentant une ouverture circulaire et des emplacements de montage (2) agencés en décalage de 180° pour des tenons de paliers (16) fixés sur un couvercle (3) mis en place et refermant l'ouverture, ledit couvercle (3) étant en rotation autour de l'axe horizontal ainsi formé,
**caractérisé en ce que**
- sur au moins un tenon de palier (16) est fixé un pignon (4),
- **en ce qu'**une poignée de rotation (5) coopère avec la coiffe de forme cylindrique, ladite poignée pouvant être posée sur la coiffe cylindrique du récipient (1) et montée avec possibilité de rotation au moyen de contre-paliers (7) rapportés, autour de l'axe longitudinal du récipient (1), et maintenue de façon bloquée sur le récipient (1),
- **en ce que** les emplacements de montage (2) sont prévus soit sur la coiffe de forme cylindrique soit sur la paroi enveloppe de la poignée de rotation (5),
- **en ce qu'**il est prévu sur la face intérieure de la poignée de rotation (5) ou sur la coiffe de forme cylindrique et dans la région du pignon (4), une rangée de dents (9) ou au moins un tronçon d'une couronne dentée, s'étendant sur au moins une certaine plage angulaire, dans laquelle/lequel engrène le pignon (4), et
- **en ce que** par une rotation relative de la poignée de rotation (5) par rapport au récipient (1), le couvercle (3) pivote.

2. Cendrier selon la revendication 1, **caractérisé en ce que** le couvercle (3) est réalisé sous forme de calotte, et dépasse hors du plan annulaire supérieur (10) de la poignée de rotation (5) sur le côté supérieur en formant une coupole, dans une position de fermeture, et le diamètre de couvercle (3) est ainsi choisi que, par rotation de la poignée de rotation (5), la calotte tourne et le côté intérieur est dirigé vers le haut lors d'une rotation de 180°, et le couvercle (3) peut être amené dans la seconde position de fermeture.

3. Cendrier selon la revendication 2, **caractérisé en ce qu'**un talon (12) est appliqué en dépassement sur la surface intérieure du couvercle (3) en forme de calotte, talon sur lequel sont prévues des impressions en forme de rainures pour la pose d'une cigarette ou d'un cigare, et **en ce qu'**il est prévu des saillies (13) pour pouvoir éteindre sur ces surfaces la braise d'une cigarette d'un cigare en écrasant celle-ci.

4. Cendrier selon la revendication 3, **caractérisé en ce qu'**il est prévu une cavité (14) autour du talon (12) pour recevoir des cendres.

5. Cendrier selon la revendication 1, **caractérisé en ce que,** lorsque le couvercle (3) est fermé, il est prévu sur le côté supérieur au moins un logement (11) en forme de coque pour une cigarette ou pour un cigare.

6. Cendrier selon la revendication 1, **caractérisé en ce que** la poignée de rotation (5) coiffe avec enclenchement les arêtes de coulissement (6) prévues sur les contre-paliers (7) au moyen du talon de forme cylindrique, ou s'engage dans des évidements.

7. Cendrier selon la revendication 1 ou 6, **caractérisé en ce que** la poignée de rotation (5) est en matière plastique et est réalisée sous forme annulaire et présente sur la paroi enveloppe des saillies de paroi formant sur le côté intérieur des contrebutées élastiques (7), ou des entailles à ressorts élastiques, sur les arêtes inférieures desquelles sont prévus des ergots d'enclenchement dépassant vers l'intérieur, qui passent par-dessous une bague de guidage extérieure sur le talon de forme cylindrique à l'état enclenché.

8. Cendrier selon la revendication 1, 6 ou 7, **caractérisé en ce que** la poignée de rotation (5) présente le côté supérieur un plan de retrait (10) de forme annulaire, et **en ce que** la rangée de dents (9) est prévue sur la face intérieure de ce retrait de forme annulaire.

9. Cendrier selon la revendication 1, 6 ou 7, **caractérisé en ce que** la rangée de dents (9) sur la face intérieure ou sur la face extérieure du talon de forme cylindrique est agencée à une distance telle de la bordure supérieure que le pignon (4) monté aux emplacements de palier dans la paroi enveloppe de la poignée de rotation (5) est déplaçable avec l'arbre posé ou au-dessus, avec rotation simultanée, grâce à l'engrènement dans la denture.

10. Cendrier selon la revendication 1, 6, 7, 8 ou 9, **caractérisé en ce que** la poignée de rotation (5), le retrait en forme annulaire et/ou le couvercle (3) sont anodisés ou réalisés en métal.

11. Cendrier selon la revendication 5, **caractérisé en ce que** l'évidement (11) en forme de coque est recouvert par une pièce d'insert adaptée au contour ou par un insert porte-publicité.

12. Cendrier selon la revendication 1, **caractérisé en ce que** le récipient est réalisé avec une section arrondie ou polygonale, et présente sur le côté supérieur un talon périphérique en forme de collerette et/ou une bague de guidage (21), conformé(e) dans son prolongement ou fixé(e) sur celui-ci.

13. Cendrier selon la revendication 1 ou 12, **caractérisé en ce que** le récipient (1) comporte sur la face inférieure une croix d'arrêt (15) ou un évidement d'arrêt ou encore un talon d'arrêt, et est susceptible d'être posé avec le fond sur une surface de montage, adaptée au contour, dans un récipient extérieur, ou est susceptible d'être mis en place dans un évidement d'un cache dans un véhicule automobile, de manière bloquée vis-à-vis d'une rotation, ou **en ce qu'**il est prévu des nervures ou des boutons en dépassement sur la paroi extérieure, qui peuvent être mis/mises en place dans des rainures dans une paroi d'un logement dans un véhicule automobile ou un récipient, en vue du blocage antirotation.

14. Cendrier selon la revendication 1, **caractérisé en ce que** le récipient (1) est en métal, en céramique, ou en matière plastique résistant à la chaleur.

15. Cendrier selon la revendication 1, **caractérisé en ce qu'**un un éclairage est intégré dans la poignée de rotation (5), et **en ce que** la face supérieure de forme annulaire au moins est réalisée au moins partiellement transparente, et la source de lumière se trouve au-dessous de la face supérieure.

16. Cendrier selon la revendication 1, **caractérisé en ce que** la longueur de la rangée de dents est accordée au nombre de dents du pignon (4) de telle façon que lors d'une rotation de la poignée de rotation dans une direction le couvercle est pivoté au maximum de 180°, et lors d'une rotation opposée celui-ci est pivoté en retour sur au moins 180°, et celui-ci est susceptible d'occuper des positions intermédiaires.

17. Cendrier selon la revendication 1 ou 16, **caractérisé en ce que** dans une direction de rotation de la poignée de rotation se produit un pivotement du couvercle ou du capuchon uniquement jusque que dans une position de fermeture, alors que dans l'autre direction de rotation il est possible d'obtenir une sur-rotation au-delà de 180°.

18. Cendrier selon la revendication 1, 16 ou 17, **caractérisé en ce que** sur le second tenon de palier, prévu à l'opposé du pignon (4), il est prévu un élément de butée (17), agencé avec possibilité de rotation de manière synchrone avec le couvercle (3), et en rotation contre une butée fixe contre le récipient (1) ou contre la face intérieure de la poignée de rotation (5), en limitant simultanément l'angle de pivotement du couvercle (3).
